# EUROPEAN PATENT APPLICATION

(11) **EP 4 142 217 A1**
(43) Date of publication of application: **01.03.2023**
(21) Application number: 21793297.9
(22) Date of filing: 15.03.2021
(51) Int. Cl.: H04L 12/24

(54) **INTER-NODE COMMUNICATION METHOD AND DEVICE BASED ON MULTIPLE PROCESSING NODES**

(30) Priority: 24.04.2020 CN 202010334759
(71) Applicant: Cambricon (Xi'an) Semiconductor Co., Ltd., Xi'an City, Shaanxi 710116 (CN)
(72) Inventor: CHAO, Lu, Beijing 100191 (CN); LIANG, Fan, Beijing 100191 (CN); CHAI, Qinglong, Beijing 100191 (CN); ZHANG, Xiao, Beijing 100191 (CN); GAO, Yanqiang, Beijing 100191 (CN); SUN, Yongzhe, Beijing 100191 (CN); LI, Zhiyong, Beijing 100191 (CN); ZHANG, Chen, Beijing 100191 (CN); MENG, Tian, Beijing 100191 (CN)
(74) Representative: Boult Wade Tennant LLP
(86) International application number: PCT/CN2021/080888
(87) International publication number: WO 2021/213075

(57) **Abstract**

The present disclosure relates to a method, device, and communication configuration apparatus for performing inter-node communication based on a plurality of processing nodes. The communication configuration apparatus is included in a combined processing apparatus. The combined processing apparatus further includes an interconnection interface and other processing apparatus. The communication configuration apparatus interacts with other processing apparatus to jointly complete a computing operation specified by a user. The combined processing apparatus further includes a storage apparatus. The storage apparatus is connected to the communication configuration apparatus and other processing apparatuses, respectively. The storage apparatus is used for storing data of the communication configuration apparatus and other processing apparatus. A technical solution of the present disclosure may improve efficiency of the inter-chip communication.

## Description

### CROSS REFERENCE OF RELATED APPLICATION

The present application claims priority to: Chinese Patent Application No. 202010334759.9 with the title of "Inter-Node Communication Method and Device Based on Multiple Processing Nodes" filed on April 24, 2020, the content of which is incorporated herein by reference in its entirety.

### TECHNICAL FIELD

The present disclosure relates to the technical field of artificial intelligence. More specifically, the present disclosure relates to the field of inter-chip communication of a plurality of processors.

### BACKGROUND

During neural network training, if consuming time for training a neural network with a size of X by a single machine is T, when there are N identical machines to train the neural network, in an ideal state, training time should be T/N, which is also known as ideal linear speedup. However, the ideal linear speedup is unpractical because of communication overheads. Although a computing part may be accelerated linearly, a communication part (such as an AllReduce algorithm) is objective and may not be eliminated.

In order to approach the ideal linear speedup, there are many methods. One method is to optimize communication time, such as shortening the communication time; another method is to overlap operations, such as masking the communication time in computing time (such as communication convergence and asynchronous update, and the like).

There are many methods to optimize the communication time, such as adopting high-speed communication technologies and adopting an optimized communication algorithm.

During a neural network training process of multiple machines and multiple board cards, in order to ensure convergence of data parallel training results of the multiple machines and the multiple board cards, each node involved in distributed training is required to send gradient information ΔWi for back propagation (BP) by a current node to other nodes, so as to finally enable each node to obtain all gradient information, which is Σ△Wi. A method for propagating and accumulating the gradient information is called the AllReduce algorithm.

The AllReduce algorithm may be implemented in different network topology structures, where an AllReduce algorithm optimally implemented in a ring topology (Ring) adopts a Ring AllReduce algorithm.

From the perspective of a single board card, a core process that is required to be implemented by the AllReduce includes: Receive (R for short), Compute (C for short), and Send (S for short). In the Ring AllReduce algorithm, R corresponds to receiving gradient information △Wi-1 from an upstream node, C corresponds to computing △Wi = Add(△Wi-1, △Wi), and S corresponds to sending gradient information △Wi downstream.

However, existing technologies may not fully support an R-C-S process on a processing device side, or even if the processing device side may fully support the R-C-S process, some problems, such as a waste of computing resources or an increase of chip area and power consumption caused by thread management, may be brought.

Additionally, in the existing technologies, communication between processing nodes requires participation and management of a host, resulting in frequent communication between the host and the processing nodes, thus reducing communication efficiency and computation efficiency. Therefore, a problem that is to be addressed by the present disclosure is how to fully support the R-C-S process on the processing device side without introducing chip thread management capabilities while efficiently utilizing computing resources.

### SUMMARY

The purpose of the present disclosure is to solve the shortcomings of unreasonable occupation and waste of computing resources in the existing technologies.

A first aspect of the present disclosure provides a method for performing inter-node communication based on a plurality of processing nodes, where at least two processing nodes of the plurality of processing nodes form a communication topology structure. The method includes: constructing task description information, where the task description information includes at least one of followings: receiving address information, computing task information, and sending address information; and sending the task description information to the at least two processing nodes to enable processing nodes that have received the task description information to perform the inter-node communication according to the task description information.

A second aspect of the present disclosure provides a device for performing inter-node communication based on a plurality of processing nodes, where at least two processing nodes of the plurality of processing nodes form a communication topology structure. The device includes: a third apparatus configured to construct task description information, where the task description information includes at least one of followings: receiving address information, computing task information, and sending address information; and a fourth apparatus configured to send the task description information to the at least two processing nodes to enable processing nodes that have received the task description information to perform the inter-node communication according to the task description information.

A third aspect of the present disclosure provides a system for performing inter-node communication based on a plurality of processing nodes. The system includes: a plurality of processing nodes, where at least two processing nodes of the plurality of processing nodes form a communication topology structure; and a host, which includes a second constructing unit. The second constructing unit includes: a third apparatus configured to construct task description information, where the task description information includes at least one of followings: receiving address information, computing task information, and sending address information; and a fourth apparatus configured to send the task description information to the at least two processing nodes to enable processing nodes that have received the task description information to perform the inter-node communication according to the task description information.

A fourth aspect of the present disclosure provides an electronic device. The electronic device includes: one or a plurality of processors; and a memory, on which a computer-executable instruction is stored, where, when the computer-executable instruction is run by the one or the plurality of processors, the electronic device performs the above-mentioned method.

A fifth aspect of the present disclosure provides a computer-readable storage medium, which includes a computer-executable instruction. When the computer-executable instruction is run by one or a plurality of processors, the above-mentioned method is performed.

The method of pre-applying resources of the present disclosure solves consistent occupation of multi-node resources in a distributed scenario and relieves resource deadlocks caused by insufficient resource application of some nodes of the processing device. Additionally, the method solves automatic routing of data receiving, computing, and sending of the processing device without requiring a host to actively intervene an execution process of the processing device. Further, the method is user-friendly without requiring a user to understand an underlying hardware structure, a descriptor, or a complex configuration process of a template, thus reducing development complexity of a distributed task (such as AllReduce).

Another beneficial effect of the present disclosure lies in that, by dividing computing and communication tasks into three parts including receiving, computing, and sending, the user may independently configure and program these three parts including receiving, computing, and sending to realize complex many-to-one and one-to-many communication scenarios.

### BRIEF DESCRIPTION OF DRAWINGS

By reading the following detailed description with reference to drawings, the above-mentioned and other objects, features and technical effects of exemplary implementations of the present disclosure will become easier to understand. In the drawings, several implementations of the present disclosure are shown in an exemplary but not restrictive manner, and the same or corresponding reference numerals indicate the same or corresponding parts.
FIG. 1 is a schematic structural diagram of a processing node according to an implementation of the present disclosure.
FIG. 2 is a schematic diagram of a connection between one processing node and other processing nodes according to an implementation of the present disclosure.
FIG. 3 is an environment diagram of a system that is applicable according to a method of the present disclosure.
FIG. 4a is a flowchart of a method for constructing a communication topology structure based on a plurality of processing nodes according to an implementation of the present disclosure.
FIG. 4b is a schematic diagram of a multi-processing-node system for constructing a communication topology structure based on a plurality of processing nodes according to an implementation of the present disclosure.
FIGs. 5a-5c are schematic diagrams of setting a plurality of pieces of node configuration information for a single node according to an implementation of the present disclosure. FIG. 5a shows that the single node has a plurality of inputs; FIG. 5b shows that the single node has a plurality of outputs; and FIG. 5c shows that the single node has a plurality of inputs and a plurality of outputs.
FIGs. 6a-6c illustratively show schematic diagrams of a chain topology structure, a ring topology structure, and a tree topology structure, respectively.
FIG. 7 shows a device for constructing a communication topology structure based on a plurality of processing nodes according to an implementation of the present disclosure.
FIG. 8a shows a method for performing inter-node communication based on a plurality of processing nodes according to an implementation of the present disclosure.
FIG. 8b is a schematic diagram of a system for performing inter-node communication based on a plurality of processing nodes according to an implementation of the present disclosure.
FIG. 9 is a block diagram of a device for performing inter-node communication based on a plurality of processing nodes according to an implementation of the present disclosure.
FIG. 10 is a schematic block diagram of a combined processing apparatus.
FIG. 11 is a schematic block diagram of a board card.

### DETAILED DESCRIPTION

The technical solution in embodiments of the present disclosure will be described clearly and completely hereinafter with reference to drawings in the embodiments of the present disclosure. Obviously, embodiments to be described are merely some rather than all embodiments of the present disclosure. All other embodiments obtained by those skilled in the art based on the embodiments of the present disclosure without creative efforts shall fall within the scope of protection of the present disclosure.

It should be understood that terms such as "first", "second", "third", and "fourth" that appear in the claims, the specification, and the drawings are used for distinguishing different objects rather than describing a specific order. It should be understood that terms "including" and "comprising" used in the specification and the claims indicate the presence of a feature, an entity, a step, an operation, an element, and/or a component, but do not exclude the existence or addition of one or more of other features, entities, steps, operations, elements, components, and/or collections thereof.

It should also be understood that terms used in the specification of the present disclosure are merely intended to describe a specific embodiment rather than to limit the present disclosure. As being used in the specification and the claims of the present disclosure, unless the context clearly indicates otherwise, singular forms such as "a", "an", and "the" are intended to include plural forms. It should also be understood that a term "and/or" used in the specification and the claims refers to any and all possible combinations of one or more of relevant listed items and includes these combinations.

As being used in this specification and the claims, a term "if" may be interpreted as "when", or "once" or "in response to a determination" or "in response to a case where something is detected" depending on the context. Similarly, depending on the context, a clause "if it is determined that" or "if [a described condition or event] is detected" may be interpreted as "once it is determined that", or "in response to a determination", or "once [a described condition or event] is detected", or "in response to a case where [a described condition or event] is detected".

In the present disclosure, a processing device may be any apparatus, module, device, and unit that may receive, compute, and send data, such as a processor, a chip, and a circuit, and the like.

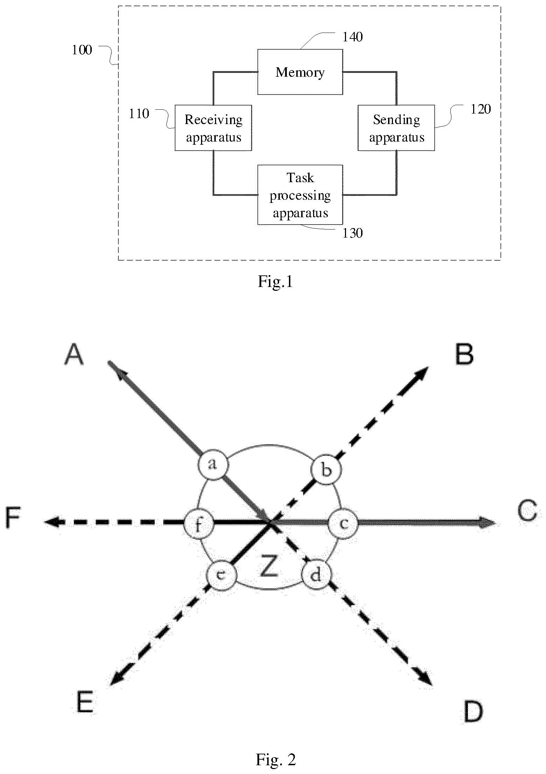

FIG. 1 is a schematic structural diagram of a processing node according to an implementation of the present disclosure.

The processing node may be, may include, or may be included in the aforementioned processing device. The processing node may include a communication apparatus 100, including a receiving apparatus 110, a task processing apparatus 130, a sending apparatus 120, and a memory 140. One side of the task processing apparatus 130 is connected to the receiving apparatus 110, and another side of the task processing apparatus 130 is connected to the sending apparatus 120. The receiving apparatus 110 and the sending apparatus 120 are connected to the memory 140, respectively.

The receiving apparatus 110 may receive data from other processing nodes or an upper driver and send the data received to the task processing apparatus 130 for computing, so as to obtain to-be-sent data. The memory 140 may be used to store various types of data received by the communication apparatus and during a computing process. The sending apparatus 130 may be used to send the data out.

It is required to be understood that the explanation of each processing node above is only for the sake of understanding. In the technical solution of the present disclosure, a user is not required to understand an underlying hardware structure and a parsing process of an underlying signal.

FIG. 2 is a schematic diagram of a connection between one processing node and other processing nodes according to an implementation of the present disclosure.

In FIG. 2, Z may be regarded as a processing node. The processing node may have a plurality of ports, such as ports a-f. The processing node Z may be connected to other processing nodes A-F through these ports. Connections between the processing node Z and other processing nodes A-F may be enabled or disabled, thus forming different topology structures. For example, FIG. 2 shows that both a connection between the processing node Z and a processing node A and a connection between the processing node Z and a processing node C are enabled (which are represented by solid lines). However, although there are physical connections between the processing node Z and other processing nodes B, D, E, and F, there is no actual communication (which is represented by dashed lines), thereby forming a topology structure (A, Z, C). It may be understood that the processing node Z may further form any other type of topology structure, such as (F, Z, B), (E, Z, A), and (A, Z, (B, C)). The (A, Z, (B, C)) shows that a connection between the processing node Z and the processing node A is enabled, and both a connection between the processing node Z and the processing node B and a connection between the processing node Z and the processing node C are enabled.

It may be shown from the above that, by changing enabling relationships of connections between each processing node and other processing nodes, topology structures that are required may be formed conveniently.

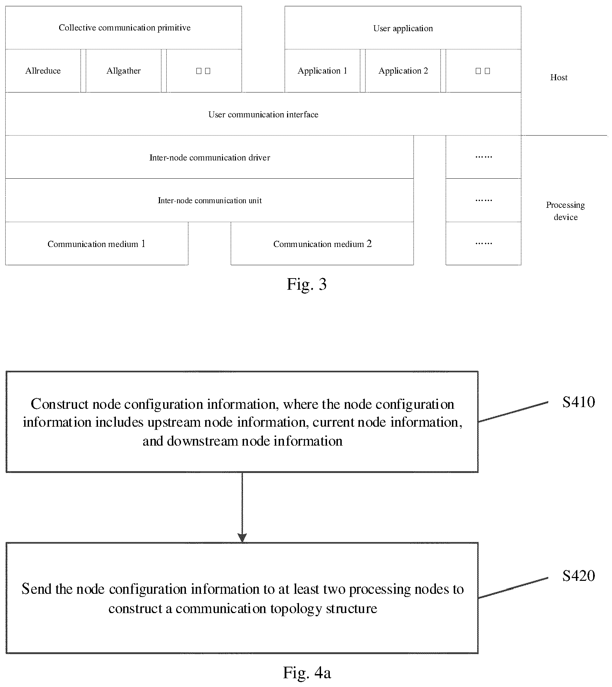

FIG. 3 is an environment diagram of a system that is applicable according to a method of the present disclosure.

As shown in FIG. 3, the system may include a host and a processing device. The processing device may be equal to, may include, or may be included in a processing node. As such, the processing device and the processing node may be used interchangeably in the present disclosure. It is required to be understood that the processing device may be combined with the host to form one system, or the processing device may be an independent system. A user may edit in the host to manage the processing device. The host may be implemented by adopting a general-purpose computer or a special-purpose computer and may include collective communication primitives, such as AllReduce and Allgather mentioned above, a plurality of types of user applications, and an inter-node communication driver. The processing device may include an inter-node communication unit, and a plurality of types of communication media and corresponding ports, such as RoCE and Interlaken, under the inter-node communication unit.

The host may further include a user communication interface of the present disclosure. The user communication interface may be used to manage communication between processing nodes without modifying a driver program every time. The user is not required to understand an underlying hardware structure and a parsing process of an underlying signal. By sending corresponding information to a kernel layer through the user communication interface, a required topology structure may be constructed, and inter-node communication and computing may be performed in the topology structure constructed.

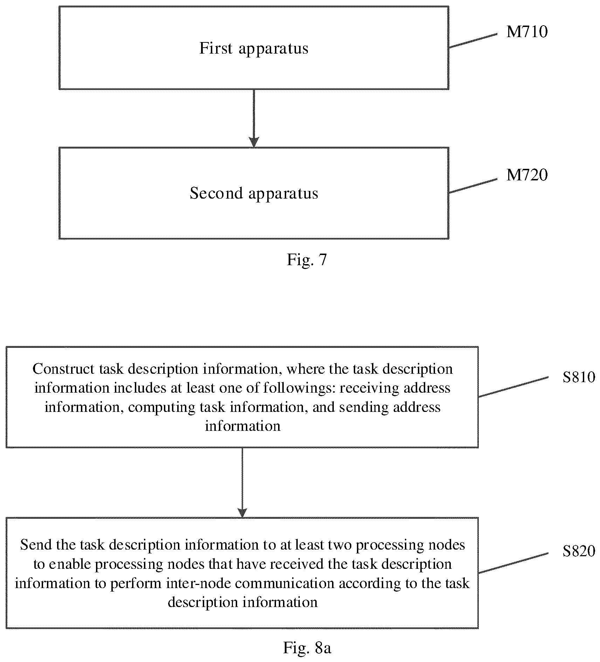

FIG. 8a shows a method for performing inter-node communication based on a plurality of processing nodes according to an implementation of the present disclosure, where at least two processing nodes of the plurality of processing nodes form a communication topology structure. The method includes: in an operation S810, constructing task description information, where the task description information includes at least one of followings: receiving address information, computing task information, and sending address information; and in an operation S820, sending the task description information to the at least two processing nodes to enable processing nodes that have received the task description information to perform the inter-node communication according to the task description information.

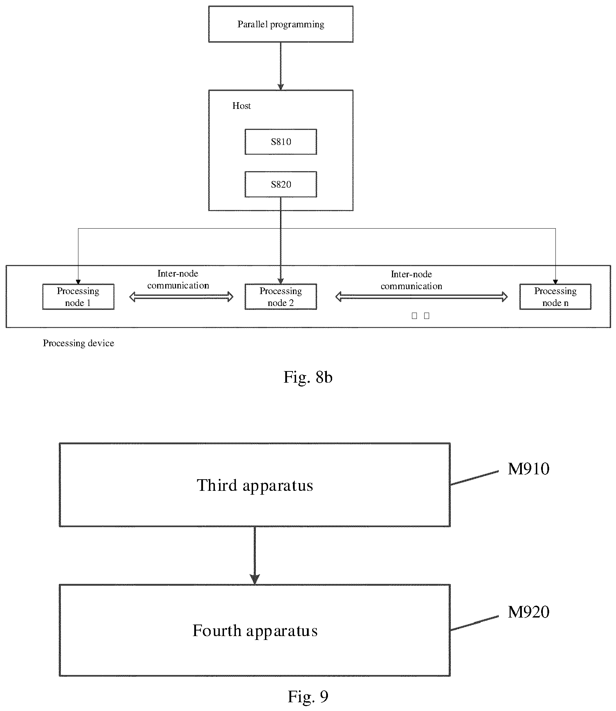

FIG. 8b is a schematic diagram of a system for performing inter-node communication based on a plurality of processing nodes according to an implementation of the present disclosure.

In FIG. 8b, task description information may be sent to a processing node 1, a processing node 2, ..., and a processing node n, and the like. After receiving the task description information, the processing nodes may perform communication and computing according to the task description information. It may be shown from FIG. 8b that a user may construct the task description information in a host and send the task description information to underlying processing nodes. During this process, the user is not required to understand an underlying hardware structure, a descriptor, or a complex configuration process of a template, thus reducing development complexity of a distributed task (such as AllReduce).

First, a topology structure will be described. A type of the topology structure may include any type, such as a chain topology, a ring topology, and a tree topology, and the like.

As shown in FIG. 2, since different topology structures may be formed by changing (enabling or disabling) a connection of each processing node, all kinds of known or future methods may be used to form the plurality of processing nodes into required topology structures. For example, different topology structures may be formed either by changing a hard connection between each processing node or by controlling a routing relationship between the plurality of processing nodes by software.

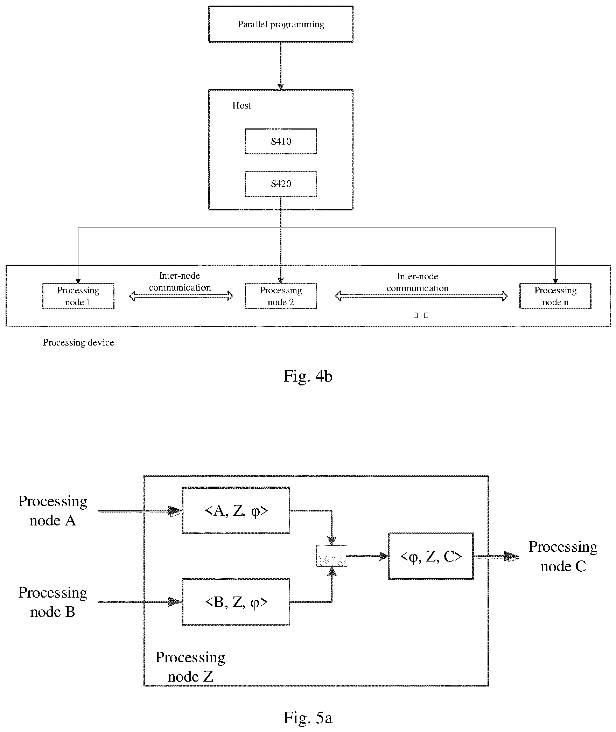

FIG. 4a is a flowchart of a method for constructing a communication topology structure based on a plurality of processing nodes according to an implementation of the present disclosure. FIG. 4b is a schematic diagram of a multi-processing-node system for constructing a communication topology structure based on a plurality of processing nodes according to an implementation of the present disclosure.

As shown in FIG. 4a, the method may include: in an operation S410, constructing node configuration information, where the node configuration information includes upstream node information, current node information, and downstream node information; and in an operation S420, sending the node configuration information to at least two processing nodes to construct the communication topology structure.

First, the node configuration information may be constructed in a host. The node configuration information may indicate how processing nodes or connections between each processing node and other processing nodes will be configured. Constructing the node configuration information in the host may be implemented through parallel programming.

According to an implementation of the present disclosure, here, "other processing nodes" may be processing nodes having connections with the processing node. Assuming that a certain processing node is called a current node, a processing node that sends data or information to the current node is called an upstream node of the current node, and a processing node that receives the data or information from the current node is called a downstream node of the current node. Therefore, the node configuration information including the upstream node information, the current node information, and the downstream node information may be used to describe a certain node and other nodes adjacent to the node completely.

In a case that there are two processing nodes, such as a processing node A and a processing node B, and the processing node A sends data to the processing node B, and the data is processed in the processing node B. The processing node B is the current node, the processing node A is an upstream node of the processing node B, and there is no downstream node of the processing node B.

It may be understood that, in the case of two processing nodes including the processing node A and the processing node B above, if the processing node A is the current node, the processing node B is the downstream node of the processing node A, and there is no upstream node of the processing node A.

Additionally, it is further required to be understood that "sending the node configuration information to at least two processing nodes" does not necessarily mean sending the node configuration information to the processing nodes directly, but for example, sending the node configuration information to a driver and then sending the node configuration information to the processing nodes directly or indirectly by the driver. Any direct or indirect method capable of sending the node configuration information to the processing nodes shall fall within the scope of protection of the present disclosure.

After the node configuration information is constructed, as shown in both FIG. 4a and FIG. 4b, the node configuration information may be sent to at least two processing nodes, thus forming different topology networks through the plurality of processing nodes. In FIG. 4b, the node configuration information constructed may be sent to a processing node 1, a processing node 2, ..., and a processing node n, and the like. After receiving the node configuration information, the processing nodes may form different topology networks, and based on these topology networks, the processing nodes may perform communication and process data.

In the solution above, as long as running rules of the processing nodes of each device are set in the host, the host may be no longer involved in communication and data processing between the processing nodes, thus decreasing interactions between the host and the device and improving running efficiency.

It is required to be understood that FIG. 4b is only an example of the host and the processing device, both of which are not necessarily as shown in FIG. 4. For example, the plurality of processing nodes may be in either one processing device or a plurality of processing devices and may be controlled by one or a plurality of hosts. Each host may control one or a plurality of processing nodes. The control of the processing node by the host may be in either a serial manner or a parallel manner. For example, the host may configure each processing node one by one, or the host may configure the plurality of processing nodes simultaneously. Any combination method of the host and the processing node shall fall within the scope of protection of the present disclosure.

According to an implementation of the present disclosure, the upstream node information may be used to indicate a processing node sending data to the current node, the current node information may be used to indicate a processing node computing the data received, and the downstream node information may be used to indicate a processing node receiving the data computed from the current node.

Taking three interconnected processing nodes A, B, and C as examples, the processing node A is an upstream node of the processing node B and sends data to the processing node B; the processing node B performs a computing function and performs computing and processing after receiving the data from the processing node A; and the processing node C is a downstream node of the processing node B and sends the data processed to the processing node C after the processing node B processes the data. Therefore, the node configuration information may be sent to the processing node B, and after receiving the node configuration information, the processing node B may parse the node configuration information. As such, it is known that the upstream node that sends the data to the processing node B is the processing node A, and after computing and processing the data received, the processing node B shall send these pieces of data to the downstream processing node C. By sending such node configuration information to each processing node, the processing node that has received the node configuration information may know a role it plays and detailed information about the upstream node and the downstream node. Therefore, by modifying content of the node configuration information, different topology networks may be arranged and designed, efficiency of setting the topology networks may be improved, and difficulty of setting the topology networks may be reduced.

There are many forms of node configuration information. According to an implementation of the present disclosure, the node configuration information may be in the form of a queue tuple <upstream node, current node, downstream node>. As described above, when the node configuration information is sent to each processing node, information included in the tuple may enable the processing node that has received the node configuration information to know the role it plays and the detailed information of the upstream node and the downstream node.

According to another implementation of the present disclosure, the node configuration information may be in the form of a queue tuple <upstream node, downstream node>. In this implementation, an element "current node" is omitted since the current node may be set as a default, which means that, no matter which processing node the node configuration information is sent to, the processing node that has received the node configuration information is the current node by default.

According to an implementation of the present disclosure, node configuration information for a single processing node has a plurality of pieces of node configuration information, and the node configuration information has a plurality of pieces of different upstream node information and/or a plurality of pieces of different downstream node information.

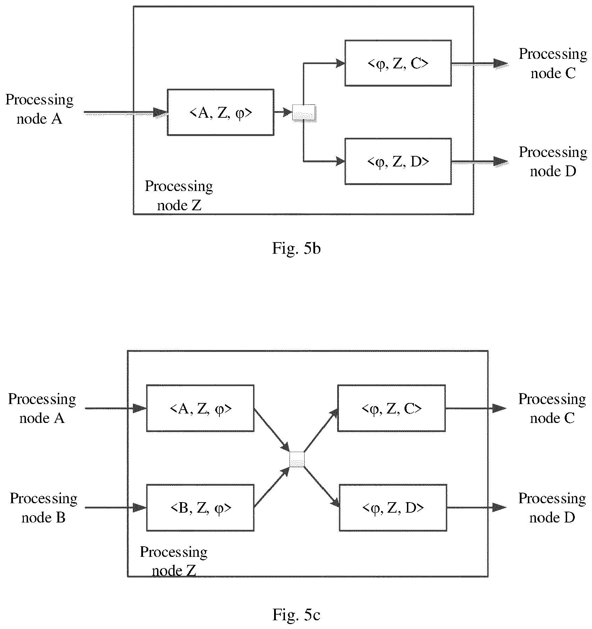

FIGs. 5a-5c are schematic diagrams of setting a plurality of pieces of node configuration information for a single node according to an implementation of the present disclosure. FIG. 5a shows that the single node has a plurality of inputs; FIG. 5b shows that the single node has a plurality of outputs; and FIG. 5c shows that the single node has a plurality of inputs and a plurality of outputs.

As shown in FIG. 5a, a node Z is a current node and includes two upstream nodes A and B and one downstream node C. As such, in order to implement such configuration, node configuration information that is sent to the processing node Z may include: <A, Z, ϕ>, <B, Z, ϕ>, and <ϕ, Z, C>, where ϕ represents a null. In this implementation, the processing node Z may receive data from both the processing node A and the processing node B, and after computing and processing the data, the processing node Z may send the data processed to the processing node C. Additionally, FIG. 5a illustratively represents a task processing part for processing and computing data that is from the processing node A and the processing node B through a box. The task processing part may correspond to the task processing apparatus shown in FIG. 1, which will not be repeated in the following.

As shown in FIG. 5b, a node Z is a current node and includes one upstream node A and two downstream nodes C and D. As such, in order to implement such configuration, node configuration information that is sent to the processing node Z may include: <A, Z, ϕ>, <ϕ, Z, C>, and <ϕ, Z, D>, where ϕ represents a null. In this implementation, the processing node Z may receive data from the processing node A, and after computing and processing the data, the processing node Z may send the data processed to both the processing node C and the processing node D.

As shown in FIG. 5c, a node Z is a current node and includes two upstream nodes A and B and two downstream nodes C and D. As such, in order to implement such configuration, node configuration information that is sent to the processing node Z may include: <A, Z, ϕ>, <B, Z, ϕ>, <ϕ, Z, C>, and <ϕ, Z, D>, where ϕ represents a null. In this implementation, the processing node Z may receive data from both the processing node A and the processing node B, and after computing and processing the data, the processing node Z may send the data processed to both the processing node C and the processing node D.

It is required to be understood that the above illustrates two upstream nodes and two downstream nodes, however, as long as a count of ports allows, those skilled in the art may expand the upstream nodes and the downstream nodes to any number of nodes. Additionally, the form of a tuple may only include the upstream node and the downstream node without the current node.

Additionally, in the above, although ϕ represents the null, ϕ plays a bridging role as the same node. For example, <B, Z, ϕ> and <ϕ, Z, C> may represent that the processing node Z is a bridging node between the processing node B and the processing node C.

According to an implementation of the present disclosure, one of the upstream node information and the downstream node information may be null.

In addition to the above case where the upstream node or the downstream node is null, there are other cases. For example, when a certain processing node is an endpoint of the topology structure, the upstream node information or the downstream node information may be null, which will be described in detail hereinafter.

According to an implementation of the present disclosure, sending the node configuration information to at least two processing nodes to construct the communication topology structure includes: sending different node configuration information to at least part of processing nodes of all processing nodes to construct the at least part of processing nodes as different communication topology structures.

It may be shown from the description above that, by sending different node configuration information to each processing node, processing nodes that have received the node configuration information may form different connections. As such, by sending the node configuration information to the plurality of processing nodes, more complex and various topology structures may be formed.

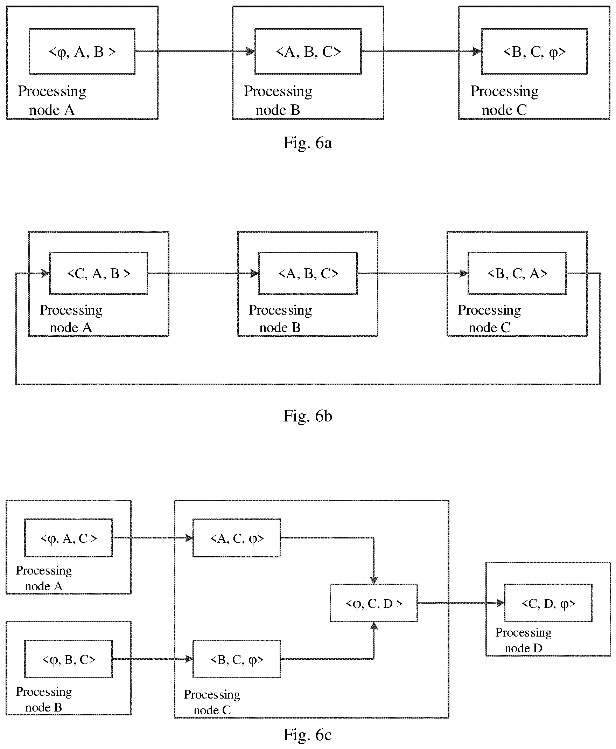

FIGs. 6a-6c illustratively show schematic diagrams of a chain topology structure, a ring topology structure, and a tree topology structure, respectively.

As shown in FIG. 6a, a processing node A, a processing node B, and a processing node C constitute a chain topology structure. These three processing nodes A, B, and C are connected serially in turn. When the processing node A is an endpoint, node configuration information of the processing node A is <ϕ, A, B>, which means that the processing node A is a current node, an upstream node of the processing node A is a null, and a downstream node of the processing node A is the processing node B. Similarly, for the processing node B, node configuration information of the processing node B is <A, B, C>, which means that the processing node B is the current node, an upstream node of the processing node B is the processing node A, and a downstream node of the processing node B is the processing node C. Similarly, for the processing node C, node configuration information of the processing node C is <B, C, ϕ>, which means that the processing node C is the current node, an upstream node of the processing node C is the processing node B, and a downstream node of the processing node C is the null.

As shown in FIG. 6b, a processing node A, a processing node B, and a processing node C constitute a ring topology structure. These three processing nodes A, B, and C are connected serially in turn, and the processing node A and the processing node C are connected, thereby forming a ring structure. For the processing node A, node configuration information of the processing node A is <C, A, B>, which means that the processing node A is a current node, an upstream node of the processing node A is the processing node C, and a downstream node of the processing node A is the processing node B. Similarly, for the processing node B, node configuration information of the processing node B is <A, B, C>, which means that the processing node B is the current node, an upstream node of the processing node B is the processing node A, and a downstream node of the processing node B is the processing node C. Similarly, for the processing node C, node configuration information of the processing node C is <B, C, A>, which means that the processing node C is the current node, an upstream node of the processing node C is the processing node B, and a downstream node of the processing node C is the processing node A.

As shown in FIG. 6c, a processing node A, a processing node B, a processing node C, and a processing node D constitute a tree topology structure. The processing nodes A and the processing node B are connected to the processing node C, respectively, and the processing node C is connected to the processing node D. For the processing node A, node configuration information of the processing node A is <ϕ, A, C>, which means that the processing node A is a current node, an upstream node of the processing node A is a null, and a downstream node of the processing node A is the processing node C. Similarly, for the processing node B, node configuration information of the processing node B is <ϕ, B, C>, which means that the processing node B is the current node, an upstream node of the processing node B is the null, and a downstream node of the processing node B is the processing node C.

For the processing node C, since the processing node C has two inputs and one output, there are three groups of node configuration information, which are <A, C, ϕ>, <B, C, ϕ>, and <ϕ, C, D >, respectively. The <A, C, ϕ> means that the current node is C, and an upstream node of C is A. The <B, C, ϕ> means that the current node is C, and the upstream node of C is B. The <ϕ, C, D > means that the current node is C, and a downstream node of C is D.

For the processing node D, node configuration information of the processing node D is <C, D, ϕ>, which means that the current node is D, an upstream node of D is the processing node C, and a downstream node of D is the null.

It is required to be understood that FIGs. 6a-6c above are just a few examples of a plurality of types of topology structures, and those skilled in the art may construct various types of required topology structures by modifying the node configuration information and sending the node configuration information to different nodes. Additionally, for the sake of conciseness, FIG. 6a-6c omit the task processing part in FIG. 5a-5c.

Such configuration facilitates a user to construct different topology structures through a simple manner, thus simplifying operations and improving efficiency.

According to an implementation of the present disclosure, constructing the communication topology structure may include enabling the processing nodes in the communication topology structure to reserve resources.

After the communication topology structure is constructed according to the above manner, resources may be reserved for all processing nodes in the topology structure constructed, such as communication resources and/or register resources. These resources may be used for subsequent communication, storage and computing of the processing nodes. In this way, the processing nodes are not required to apply for resources temporarily during processing, thus making subsequent processing more efficient.

The communication resources above may include: a port and/or a channel required for inter-node communication. The communication port is a network medium port module wired physically between two processing nodes. The communication channel is a virtual communication link between a sending apparatus and a receiving apparatus that are matched by two processing nodes. Generally speaking, which direct memory access (DMA) sending module and which DMA receiving module are selected from a large set of DMAs.

The register resources may include storage space used for storing task description information. The task description information is used to indicate an operation to be performed by each processing node in the communication topology structure constructed. The task description information, for example, may specify what operation (such as sending, computing, and receiving) each processing node should perform, how each processing node performs the operation, and when each processing node performs the operation.

FIG. 7 shows a device for constructing a communication topology structure based on a plurality of processing nodes according to an implementation of the present disclosure. The device includes: a first apparatus M710 configured to construct node configuration information, where the node configuration information includes upstream node information, current node information, and downstream node information; and a second apparatus M720 configured to send the node configuration information to at least two processing nodes to construct the communication topology structure.

The device above may be implemented through software, hardware, or firmware, so as to realize functions shown in FIG. 4. The device may be set or integrated in any other device, such as a host or a server.

Therefore, the present disclosure further provides a system for constructing a communication topology structure based on a plurality of processing nodes. The system includes: a plurality of processing nodes; and a host, which includes a constructing unit. The constructing unit includes: a first apparatus M710 configured to construct node configuration information, where the node configuration information includes upstream node information, current node information, and downstream node information; and a second apparatus M720 configured to send the node configuration information to at least two processing nodes to construct the communication topology structure.

When it is required to send a plurality of pieces of task description information to a certain processing node, the host may pack the plurality of pieces of task description information that are sent to the same processing node to form a work request (WR). The work request serves as one task to be sent to the processing node of the processing device, and different work requests may be sent to different processing nodes. Once the processing node has received the task description information, all R-C-S processes may be performed in the processing device. As such, communication may be realized without the participation of the host.

The above has introduced how to construct different topology structures. The following will describe how to perform inter-node communication in the topology structure constructed in detail.

As shown in FIGs. 4-7, each processing node in the topology structure constructed may know information about its upstream node and downstream node. Next, task description information of these processing nodes (including the upstream node, the current node, and the downstream node) may be configured, so as to enable these constructed processing nodes to start communication and computing.

Constructing the task description information may be constructing upstream node information, current node information, and downstream node information that are known as R-C-S information. R represents receiving address information, which is used to describe a processing node responsible for receiving data. C represents computing task information, which is used to describe a processing node responsible for computing a task. S represents sending address information, which is used to describe a processing node responsible for sending the data.

It is required to be understood that the information may be only one or more kinds of the above information. The information may only include the receiving address information, the information may only include the computing task information, or the information may only include the sending address information. For example, the sending address information may be default, and therefore, there is no need to include new sending address information every time. For another example, the receiving address information may also be default, and therefore, there is no need to include new receiving address information every time. Therefore, the task description information may be varied, such as <R>, <C>, <S>, <R, C>, <R, S>, <C, S>, and <R, C, S>, and the like.

The receiving address information R is used to indicate a memory address and a memory size for storing data by the processing nodes after receiving the data. After receiving the receiving address information R, each processing node may know a specific address where the data received from the upstream node should be stored, thus facilitating a subsequent computing operation of obtaining corresponding data from appropriate storage space.

Similarly, the sending address information S is used to indicate a memory address and a memory size of to-be-sent data. After receiving the sending address information S, each processing node may know a specific storage address of data to be sent to the downstream node, thus addressing specific storage space during sending the data.

The computing task information C is used to indicate an entry address of a computing function and a parameter of the computing function. Here, the computing function may be any one of an addition function, a subtraction function, a multiplication function, a division function, a maximum function, a minimum function, and a logical and-or-invert function. It is required to be understood that the function type above is merely an illustrative explanation rather than an exhaustive list, and any type of computing function shall be included in the scope of the present disclosure.

The parameter of the computing function includes at least one of followings: an address of to-be-computed data, an output address of a computing result, and a data type of a computing operation. Taking the addition function as an example, the address of the to-be-computed data may be an input address of two addends; the output address of the computing result may be an output address of a sum of addition; and an output type of the computing operation, for example, may be a floating-point type and an integer type and may include but is not limited to Float8, Float16, Float32, Fix8, Fix16, and Fix32, and the like.

According to an implementation of the present disclosure, the parameter of the computing function may further include scheduling information used for managing and scheduling the computing operation of the processing node.

According to an implementation of the present disclosure, the scheduling information includes at least one of followings: a count of computing resources occupied, priorities of computing resources used, and a priority of each task in a plurality of tasks. The computing resources may be a computing core and any other apparatus capable of computing data.

For example, in the environment of a plurality of computing resources (such as a plurality of processors or a multi-core processor), the scheduling information may indicate a count of computing resources involved in computing, make more computing resources work in the case of high workloads, and reduce a count of computing resources used in the case of low workloads.

The priorities of computing resources used may refer to preferentially allocating which computing resources for the computing task when the computing task is received. The priorities of computing resources used may be determined according to burden of the computing resources and time consumed by the computing resources to complete a previous task. For example, computing resources with small computing burden may be allocated preferentially, and computing resources that complete the previous computing task within a short time may be used as computing resources with a higher priority.

The priority of each task in a plurality of tasks may be an order in which each task is processed. For example, tasks with similar computing time may be computed preferentially in the plurality of computing resources, so as to improve parallel computing power of data and shorten computing time.

Sending the task description information to the at least two processing nodes includes sending the task description information to the at least two processing nodes in the form of a queue, so as to enable the task description information to be executed sequentially.

By sending the task description information in the form of the queue, the processing nodes may be executed in the order of the queue. Additionally, by setting task description information of different users in different queues, each queue may be executed in a corresponding order, while different queues may also be executed in parallel, thus avoiding interference between tasks of different users caused by serial execution and reduced communication efficiency.

The task description information, such as R-C-S, is a higher-level communication description manner, guides how underlying sending, receiving, and controlling apparatuses are configured, and implicitly shows a triggering relationship between the underlying apparatuses. Rand S parts may be presented as communication descriptors required by the receiving apparatus and the sending apparatus. C part may be presented as computation controlling information of the task processing apparatus. The computation controlling information may further include a communication controlling instruction and a computation controlling instruction.

Address information of R and S parts may be converted into communication descriptors recognizable by hardware. Specifically, R part may be a destination address of a communication descriptor of an upstream node. S part may be a source address of a communication descriptor of a current node.

C part may include computation controlling instructions of most of computation controlling information required by the task processing apparatus, such as instructions that guide where an addition function is performed, how the addition function is performed, an data address required to be input by the addition, and an address to which data is written back.

According to an implementation of the present disclosure, the task description information may further include synchronization information used for enabling the processing nodes to perform the computing operation after receiving at least two pieces of data involved in computing.

An R-C-S description method may further implicitly analyze extra computation controlling information through the aforementioned topology structure information. For example, in an embodiment of a tree structure (as shown in FIG. 6c), in the case of two inputs and one output, the following may be analyzed extra: after data of two different upstream nodes arrives, since arrival order and timing of the data of two different upstream nodes are different, after the data is received, performing the computing operation (such as an addition operation) directly may lead to input data missing. For example, a processing node A and a processing node B send data simultaneously to a processing node C, and the computing operation is performed in the processing node C. After a data block x of the processing node A reaches the processing node C, a data block y of the processing node B has a high probability that it has not yet reached the processing node C, and at this time, performing the computing operation may cause an error. Therefore, after such many-to-one case is analyzed implicitly through the topology structure information, extra computation controlling information of synchronous operation will be added automatically before the computing operation. Only when both the data block x of the processing node A and the data block y of the processing node B reach the processing nodes, the computing operation may be performed. The computation controlling information of synchronous operation may be added to the task description information (for example, when the host is programming), for example, by means of a conditional statement. When the current node has a plurality of upstream nodes, the computation controlling information of synchronous operation may be added automatically; or the computation controlling information of synchronous operation may be added manually in each multi-input case. It is required to be understood that there are a plurality of cases for "after receiving data involved in computing" in the above. A first case is that, if there are two pieces of data involved in computing, the computing may be performed after all pieces of data involved in the computing are received. A second case is that, if there are more than two pieces of data involved in the computing, the computing may be performed either after all pieces of data involved in the computing are received, or after part of the data involved in the computing is received. For example, for a continuous-addition operation A+B+C+D, if, at some point, data B and data D have been received, and data A and data C have not been received, an addition operation on the data B and the data D may be performed first and a corresponding result may be cached. Then, when the data A and/or the data C is received, a further addition operation may be performed, thus obtaining a final result. The second case is beneficial to reduce waiting time and improve computation efficiency.

FIG. 9 is a block diagram of a device for performing inter-node communication based on a plurality of processing nodes according to an implementation of the present disclosure, where at least two processing nodes of the plurality of processing nodes form a communication topology structure. The device includes: a third apparatus M910 configured to construct task description information, where the task description information includes at least one of followings: receiving address information, computing task information, and sending address information; and a fourth apparatus M920 configured to send the task description information to the at least two processing nodes to enable processing nodes that have received the task description information to perform the inter-node communication according to the task description information.

The third apparatus M910 and the fourth apparatus M920 may be implemented in the system shown in FIG. 8b to perform the operation S810 and the operation S820, respectively.

Therefore, the present disclosure further provides a system for performing inter-node communication based on a plurality of processing nodes, where at least two processing nodes of the plurality of processing nodes form a communication topology structure. The system includes: a plurality of processing nodes, where at least two processing nodes of the plurality of processing nodes form a communication topology structure; and a host, which includes a second constructing unit. The second constructing unit includes: a third apparatus M910 configured to construct task description information, where the task description information includes at least one of followings: receiving address information, computing task information, and sending address information; and a fourth apparatus M920 configured to send the task description information to the at least two processing nodes to enable processing nodes that have received the task description information to perform the inter-node communication according to the task description information.

It is required to be understood that the host further includes a first apparatus M710 and a second apparatus M720, thus constructing a required topology structure through the first apparatus and the second apparatus and performing inter-node communication through the third apparatus M910 and the fourth apparatus M920.

Another aspect of the present disclosure further provides an electronic device. The electronic device includes: one or a plurality of processors; and a memory, on which a computer-executable instruction is stored, where, when the computer-executable instruction is run by the one or the plurality of processors, the electronic device performs the above-mentioned method.

Another aspect of the present disclosure further provides a computer-readable storage medium, including a computer-executable instruction, where, when the computer-executable instruction is run by one or a plurality of processors, the above-mentioned method is performed.

The method of pre-applying resources of the present disclosure solves consistent occupation of multi-node resources in a distributed scenario and relieves resource deadlocks caused by insufficient resource application of some nodes of the processing device. Additionally, the method solves automatic routing of data receiving, computing, and sending of the processing device without requiring the host to actively intervene an execution process of the processing device. Further, the method is user-friendly without requiring the user to understand an underlying hardware structure, a descriptor, or a complex configuration process of a template, thus reducing development complexity of a distributed task (such as AllReduce).

The technical solution of the present disclosure may be applied to an artificial intelligence field, may be implemented in the host and the server, or may be implemented as or may be implemented in an artificial intelligence chip. The chip may stand alone or may be included in a communication configuration apparatus 1002.

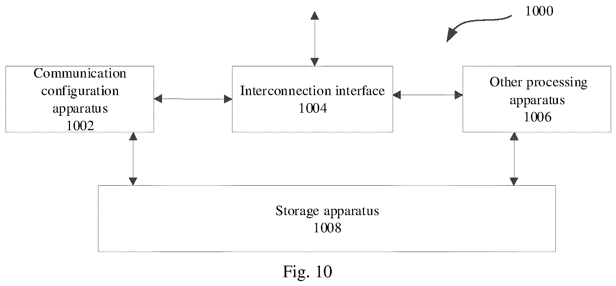

FIG. 10 shows a combined processing apparatus 1000, including the above-mentioned communication configuration apparatus 1002, an interconnection interface 1004, and other processing apparatus 1006. The communication configuration apparatus of the present disclosure interacts with other processing apparatus to jointly complete an operation specified by a user. FIG. 10 is a schematic diagram of the combined processing apparatus.

Other processing apparatus includes one or more types of general-purpose/special-purpose processors such as a central processing unit (CPU), a graphics processing unit (GPU), a neural network processor, and the like. A count of processors included in other processing apparatus is not limited herein. Other processing apparatus may serve as an interface that connects a machine learning communication configuration apparatus to external data and controls, including data moving, and may complete basic controls, such as starting and stopping the machine learning communication configuration apparatus. Other processing apparatus may also cooperate with the machine learning communication configuration apparatus to complete a computing task.

The interconnection interface may be used to transfer data and a control instruction between the communication configuration apparatus (including, for example, the machine learning communication configuration apparatus) and other processing apparatus. The communication configuration apparatus may obtain required input data from other processing apparatus and write the data in an on-chip storage apparatus of the communication configuration apparatus. The communication configuration apparatus may also obtain the control instruction from other processing apparatus and write the control instruction in an on-chip control caching unit of the communication configuration apparatus. Additionally, the communication configuration apparatus may further read data in a storage unit of the communication configuration apparatus and transfer the data to other processing apparatus.

Optionally, this structure may further include a storage apparatus 1008. The storage apparatus may be connected to the communication configuration apparatus and other processing apparatus, respectively. The storage apparatus may be used to store data of the communication configuration apparatus and other processing apparatus. The storage apparatus may be especially suitable for storing data that may not be completely stored in an internal storage of the communication configuration apparatus or other processing apparatus of the present disclosure.

The combined processing apparatus may be used as a system on chip (SOC) of a device including a mobile phone, a robot, a drone, a video surveillance device, and the like. As such, a core area of a control part may be decreased effectively, processing speed may be increased, and overall power consumption may be reduced. In this case, the interconnection interface of the combined processing apparatus may be connected to some components of the device. The some components include, for example, a webcam, a monitor, a mouse, a keyboard, a network card, and a WIFI interface.

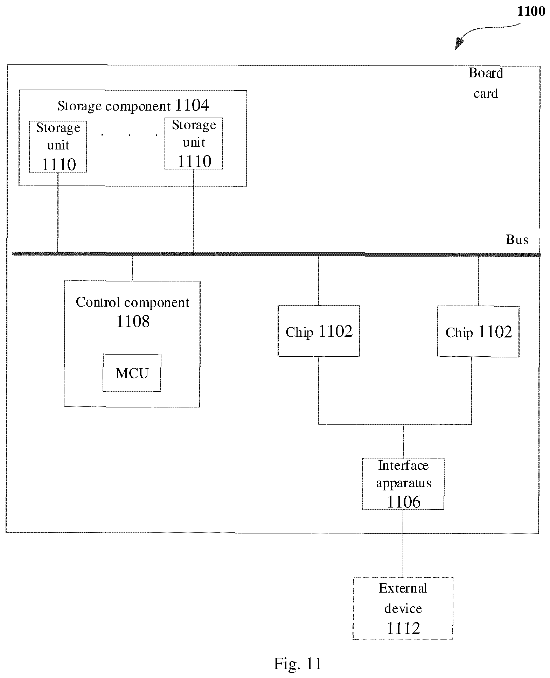

In some embodiments, the present disclosure further discloses a board card, including a chip package structure. Referring to FIG. 11, FIG. 11 shows an exemplary board card. The above-mentioned board card, other than the above-mentioned chip 1102, may further include other supporting components. The supporting components include but are not limited to: a storage component 1104, an interface apparatus 1106, and a control component 1108.

The storage component may be connected to the chip in the chip package structure through a bus. The storage component may be used for storing data. The storage component may include a plurality of groups of storage units 1110. Each group of storage units may be connected to the chip through the bus. It may be understood that each group of storage units may be a double data rate (DDR) synchronous dynamic random access memory (SDRAM).

The DDR may double the speed of the SDRAM without increasing clock frequency. The DDR may allow data to be read on rising and falling edges of a clock pulse. The speed of the DDR is twice that of a standard SDRAM. In an embodiment, the storage component may include four groups of storage units. Each group of storage units may include a plurality of DDR4 particles (chips). In an embodiment, four 72-bit DDR4 controllers may be arranged inside the chip, where 64 bits of the 72-bit DDR4 controller above are used for data transfer, and 8 bits are used for error checking and correcting (ECC) parity. In an embodiment, each group of storage units may include a plurality of DDR SDRAMs arranged in parallel. The DDR may transfer data twice in one clock cycle. A controller for controlling the DDR may be arranged in the chip, and the controller may be used to control data transfer and data storage of each storage unit.

The interface apparatus may be electrically connected to the chip in the chip package structure. The interface apparatus may be used to implement data transfer between the chip and an external device 1112 (such as a server or a computer). For example, in an embodiment, the interface apparatus may be a standard peripheral component interconnect express (PCIe) interface. For instance, to-be-processed data may be transferred by the server through the standard PCIe interface to the chip to implement data transfer. In another embodiment, the interface apparatus may also be other interfaces. The present disclosure does not limit specific representations of other interfaces mentioned above, as long as an interface unit may realize a switching function. Additionally, a computing result of the chip is still sent back to the external device (such as the server) through the interface apparatus.

The control component may be electrically connected to the chip. The control component may be used to monitor a state of the chip. Specifically, the chip and the control component may be electrically connected through a serial peripheral interface (SPI). The control component may include a micro controller unit (MCU). If the chip may include a plurality of processing chips, a plurality of processing cores, or a plurality of processing circuits, the chip may be capable of driving a plurality of loads. Therefore, the chip may be in different working states, such as a multi-load state and a light-load state. Through the control component, regulation and controls of working states of the plurality of processing chips, the plurality of processing cores, and/or the plurality of processing circuits in the chip may be realized.

In some embodiments, the present disclosure further discloses an electronic device or apparatus, including the above-mentioned board card.

The electronic device or apparatus may include a data processing apparatus, a robot, a computer, a printer, a scanner, a tablet, a smart terminal, a mobile phone, a traffic recorder, a navigator, a sensor, a webcam, a server, a cloud server, a camera, a video camera, a projector, a watch, a headphone, a mobile storage, a wearable device, a vehicle, a household appliance, and/or a medical device.

The vehicle may include an airplane, a ship, and/or a car. The household appliance may include a television, an air conditioner, a microwave oven, a refrigerator, an electric rice cooker, a humidifier, a washing machine, an electric lamp, a gas cooker, and a range hood. The medical device may include a nuclear magnetic resonance spectrometer, a B-ultrasonic scanner, and/or an electrocardiograph.

It is required to be explained that for the sake of conciseness, the foregoing method embodiments are all described as a series of combinations of actions, but those skilled in the art should know that the present disclosure is not limited by the described order of action since some steps may be performed in a different order or simultaneously according to the present disclosure. Secondly, those skilled in the art should also know that the embodiments described in the specification are all optional, and actions and modules involved are not necessarily required for the present disclosure.

In the embodiments above, the description of each embodiment has its own emphasis. For a part that is not described in detail in a certain embodiment, reference may be made to related descriptions in other embodiments.

In several embodiments provided in this disclosure, it should be understood that the disclosed apparatus may be implemented in other ways. For instance, the apparatus embodiments described above are merely exemplary. For instance, a division of units is only a logical function division. In an actual implementation, there may be other manners for the division. For instance, a plurality of units or components may be combined or integrated in another system, or some features may be ignored or may not be performed. In addition, the displayed or discussed mutual coupling or direct coupling or communication connection may be indirect coupling or communication connection using some interfaces, apparatuses, or units and may be in electrical, optical, acoustic, magnetic, or other forms.

The units described as separate components may or may not be physically separated. The components shown as units may or may not be physical units. In other words, the components may be located in one place, or may be distributed to a plurality of network units. According to actual requirements, some or all of the units may be selected for achieving purposes of the embodiments of the present disclosure.

Additionally, each functional unit in each embodiment of the present disclosure may be integrated in one processing unit, or each unit may exist separately and physically, or two or more units may be integrated in one unit. The integrated unit described above may be implemented either in the form of hardware or in the form of a software program module.

If the integrated unit is implemented in the form of the software program module and sold or used as an independent product, the integrated unit may be stored in a computer-readable memory. Based on such understanding, if the technical solution of the present disclosure is embodied in the form of a software product, the software product may be stored in a memory, and the software product may include several instructions used to enable a computer device (which may be a personal computer, a server, or a network device, and the like) to perform all or part of steps of the method of the embodiments of the present disclosure. The foregoing memory includes: a USB flash drive, a read-only memory (ROM), a random access memory (RAM), a mobile hard disk, a magnetic disk, or an optical disc, and other media that may store a program code.

The above has described the embodiments of the present disclosure in detail. The present disclosure uses specific examples to explain principles and implementations of the present disclosure. The descriptions of the embodiments above are only used to facilitate understanding of the method and core ideas of the present disclosure. Simultaneously, those skilled in the art may change the specific implementations and application scope of the present disclosure based on the ideas of the present disclosure. In summary, the content of this specification should not be construed as a limitation on the present disclosure.

The foregoing may be better understood according to the following articles:
Article 1. A method for performing inter-node communication based on a plurality of processing nodes, where at least two processing nodes of the plurality of processing nodes form a communication topology structure, and the method includes:
   constructing task description information, where the task description information includes at least one of followings: receiving address information, computing task information, and sending address information; and
   sending the task description information to the at least two processing nodes to enable processing nodes that have received the task description information to perform the inter-node communication according to the task description information.
Article 2. The method of article 1, where
   the receiving address information is used to indicate a memory address and a memory size for storing data by the processing nodes after receiving the data;
   the computing task information is used to indicate an entry address of a computing function and a parameter of the computing function; and
   the sending address information is used to indicate a memory address and a memory size of to-be-sent data.
Article 3. The method of article 2, where the entry address of the computing function includes at least one of entry addresses of following functions: an addition function, a subtraction function, a multiplication function, a division function, a maximum function, a minimum function, and a logical and-or-invert function.
Article 4. The method of article 2, where the parameter of the computing function includes at least one of followings: an address of to-be-computed data, an output address of a computing result, and a data type of a computing operation.
Article 5. The method of any one of articles 2-4, where the parameter of the computing function further includes scheduling information.
Article 6. The method of article 5, where the scheduling information includes at least one of followings: a count of computing resources occupied, priorities of computing resources used, and a priority of each task in a plurality of tasks.
Article 7. The method of any one of articles 1-6, where sending the task description information to the at least two processing nodes includes sending the task description information to the at least two processing nodes in the form of a queue, so as to enable the task description information to be executed sequentially.
Article 8. The method of any one of articles 1-7, where the at least two processing nodes of the plurality of processing nodes form the communication topology structure by:
   constructing node configuration information, where the node configuration information includes upstream node information, current node information, and downstream node information; and
   sending the node configuration information to the at least two processing nodes to construct the communication topology structure.
Article 9. The method of article 8, where
   the upstream node information is used to indicate a processing node that sends data to a current node; the current node information is used to indicate a processing node that computes the data received; and the downstream node information is used to indicate a processing node that receives the data computed from the current node.
Article 10. The method of article 8, where the node configuration information is in the form of a queue tuple, including <upstream node, downstream node> or <upstream node, current node, downstream node>.
Article 11. The method of article 8, where node configuration information for a single processing node has a plurality of pieces of node configuration information, and the node configuration information has a plurality of pieces of different upstream node information and/or a plurality of pieces of different downstream node information.
Article 12. The method of any one of articles 8-11, where one of the upstream node information and the downstream node information is null.
Article 13. The method of any one of articles 8-12, where sending the node configuration information to the at least two processing nodes to construct the communication topology structure includes:
   sending different node configuration information to at least part of processing nodes of all processing nodes to construct the at least part of processing nodes as different communication topology structures.
Article 14. The method of any one of articles 1-13, where the communication topology structure includes at least one of a chain topology structure, a ring topology structure, and a tree topology structure.
Article 15. The method of any one of articles 8-14, where constructing the communication topology structure includes enabling the processing nodes in the communication topology structure to reserve resources.
Article 16. The method of article 15, where the resources include communication resources and/or register resources.
Article 17. The method of article 16, where
   the communication resources include: a port and/or a channel required for the inter-node communication; and
   the register resources include: storage space for storing the task description information, where the task description information is used to indicate an operation to be performed by each processing node in the communication topology structure constructed.
Article 18. The method of article 17, where the task description information is stored in the storage space in the form of a queue.
Article 19. The method of any one of articles 1-18, the task description information further includes synchronization information used for enabling the processing nodes to perform a computing operation after receiving at least two pieces of data involved in computing.
Article 20. A device for performing inter-node communication based on a plurality of processing nodes, where at least two processing nodes of the plurality of processing nodes form a communication topology structure, and the device includes:
   a third apparatus configured to construct task description information, where the task description information includes at least one of followings: receiving address information, computing task information, and sending address information; and
   a fourth apparatus configured to send the task description information to the at least two processing nodes to enable processing nodes that have received the task description information to perform the inter-node communication according to the task description information.
Article 21. A system for performing inter-node communication based on a plurality of processing nodes, including:
   a plurality of processing nodes, where at least two processing nodes of the plurality of processing nodes form a communication topology structure; and
   a host, which includes a second constructing unit, where the second constructing unit includes:
   a third apparatus configured to construct task description information, where the task description information includes at least one of followings: receiving address information, computing task information, and sending address information;
   a fourth apparatus configured to send the task description information to the at least two processing nodes to enable processing nodes that have received the task description information to perform the inter-node communication according to the task description information.
Article 22. An electronic device, including:
   one or a plurality of processors; and
   a memory, on which a computer-executable instruction is stored, where, when the computer-executable instruction is run by the one or the plurality of processors, the electronic device performs the method of any one of articles 1-19.
Article 23. A computer-readable storage medium, including a computer-executable instruction, where, when the computer-executable instruction is run by one or a plurality of processors, the method of any one of articles 1-19 is performed.

## Claims

1. A method for performing inter-node communication based on a plurality of processing nodes, wherein at least two processing nodes of the plurality of processing nodes form a communication topology structure, and the method comprises:
constructing task description information, wherein the task description information includes at least one of followings: receiving address information, computing task information, and sending address information; and
sending the task description information to the at least two processing nodes to enable processing nodes that have received the task description information to perform the inter-node communication according to the task description information.

2. The method of claim 1, wherein
the receiving address information is used to indicate a memory address and a memory size for storing data by the processing nodes after receiving the data;
the computing task information is used to indicate an entry address of a computing function and a parameter of the computing function; and
the sending address information is used to indicate a memory address and a memory size of to-be-sent data.

3. The method of claim 2, wherein the entry address of the computing function includes at least one of entry addresses of following functions: an addition function, a subtraction function, a multiplication function, a division function, a maximum function, a minimum function, and a logical and-or-invert function.

4. The method of claim 2, wherein the parameter of the computing function includes at least one of followings: an address of to-be-computed data, an output address of a computing result, and a data type of a computing operation.

5. The method of any one of claims 2-4, wherein the parameter of the computing function further includes scheduling information.

6. The method of claim 5, wherein the scheduling information includes at least one of followings: a count of computing resources occupied, priorities of computing resources used, and a priority of each task in a plurality of tasks.

7. The method of any one of claims 1-6, wherein sending the task description information to the at least two processing nodes includes sending the task description information to the at least two processing nodes in the form of a queue, so as to enable the task description information to be executed sequentially.

8. The method of any one of claims 1-7, wherein the at least two processing nodes of the plurality of processing nodes form the communication topology structure by:
constructing node configuration information, wherein the node configuration information includes upstream node information, current node information, and downstream node information; and
sending the node configuration information to the at least two processing nodes to construct the communication topology structure.

9. The method of claim 8, wherein
the upstream node information is used to indicate a processing node that sends data to a current node, the current node information is used to indicate a processing node that computes the data received, and the downstream node information is used to indicate a processing node that receives the data computed from the current node.

10. The method of claim 8, wherein the node configuration information is in the form of a queue tuple, including <upstream node, downstream node> or <upstream node, current node, downstream node>.

11. The method of claim 8, wherein node configuration information for a single processing node has a plurality of pieces of node configuration information, and the node configuration information has a plurality of pieces of different upstream node information and/or a plurality of pieces of different downstream node information.

12. The method of any one of claims 8-11, wherein one of the upstream node information and the downstream node information is null.

13. The method of any one of claims 8-12, wherein sending the node configuration information to the at least two processing nodes to construct the communication topology structure includes:
sending different node configuration information to at least part of processing nodes of all processing nodes to construct the at least part of processing nodes as different communication topology structures.

14. The method of any one of claims 1-10, wherein the communication topology structure includes at least one of a chain topology structure, a ring topology structure, and a tree topology structure.

15. The method of any one of claims 8-14, wherein constructing the communication topology structure includes enabling the processing nodes in the communication topology structure to reserve resources.

16. The method of claim 15, wherein the resources include communication resources and/or register resources.

17. The method of claim 16, wherein
the communication resources include: a port and/or a channel required for the inter-node communication; and
the register resources include: storage space used for storing the task description information, wherein the task description information is used to indicate an operation to be performed by each processing node in the communication topology structure constructed.

18. The method of claim 17, wherein the task description information is stored in the storage space in the form of a queue.

19. The method of any one of claims 1-18, wherein the task description information further includes synchronization information used for enabling the processing nodes to perform a computing operation after receiving at least two pieces of data involved in computing.

20. A device for performing inter-node communication based on a plurality of processing nodes, wherein at least two processing nodes of the plurality of processing nodes form a communication topology structure, and the device comprises:
a third apparatus configured to construct task description information, wherein the task description information includes at least one of followings: receiving address information, computing task information, and sending address information; and
a fourth apparatus configured to send the task description information to the at least two processing nodes to enable processing nodes that have received the task description information to perform the inter-node communication according to the task description information.

21. A system for performing inter-node communication based on a plurality of processing nodes, comprising:
a plurality of processing nodes, wherein at least two processing nodes of the plurality of processing nodes form a communication topology structure; and
a host, which includes a second constructing unit, wherein the second constructing unit includes:
a third apparatus configured to construct task description information, wherein the task description information includes at least one of followings: receiving address information, computing task information, and sending address information; and
a fourth apparatus configured to send the task description information to the at least two processing nodes to enable processing nodes that have received the task description information to perform the inter-node communication according to the task description information.

22. An electronic device, comprising:
one or a plurality of processors; and
a memory, on which a computer-executable instruction is stored, wherein, when the computer-executable instruction is run by the one or the plurality of processors, the electronic device performs the method of any one of claims 1-19.

23. A computer-readable storage medium, comprising a computer-executable instruction, wherein, when the computer-executable instruction is run by one or a plurality of processors, the method of any one of claims 1-19 is performed.
